# EUROPÄISCHE PATENTSCHRIFT

(11) **EP 2 411 218 B1**
(45) Veröffentlichungstag und Bekanntmachung des Hinweises auf die Patenterteilung: **13.03.2013**
(21) Anmeldenummer: 10712042.0
(22) Anmeldetag: 25.03.2010
(51) Int. Cl.: B32B 17/10, C08J 5/18, C08K 3/22

(54) **FOLIE FÜR VERBUNDSICHERHEITSGLAS MIT IR-ABSORBIERENDEN EIGENSCHAFTEN**
FILM FOR LAMINATED SAFETY GLASS HAVING IR-ABSORBING PROPERTIES
FEUILLE POUR VERRE DE SÉCURITÉ FEUILLETÉ AYANT LA FACULTÉ D'ABSORBER DES RAYONNEMENTS INFRAROUGES

(30) Priorität: 27.03.2009 DE 102009001939
(43) Veröffentlichungstag der Anmeldung: 01.02.2012
(73) Patentinhaber: Kuraray Europe GmbH, 65795 Hattersheim (DE)
(72) Erfinder: BEEKHUIZEN, Jan, 53844 Troisdorf (DE); KELLER, Uwe, 53177 Bonn (DE); STENZEL, Holger, 53773 Hennef (DE)
(74) Vertreter: Kisters, Michael Marcus
(86) Internationale Anmeldenummer: PCT/EP2010/053877
(87) Internationale Veröffentlichungsnummer: WO 2010/108975

(56) Entgegenhaltungen:
- EP-A1- 1 589 078
- EP-A2- 0 678 779
- WO-A1-02/102591
- WO-A1-2009/078471
- DE-A1- 3 724 108
- US-A1- 2002 127 410

## Beschreibung

### Technisches Gebiet

Die Erfindung betrifft die Herstellung von IR-absorbierenden Folien auf Basis von Polyvinylacetal zur Herstellung von Verbundverglasungen. In die Filme sind Nanopartikel eingearbeitet und dispergiert, welche den Anteil der Sonnenstrahlung absorbieren, der für die Entstehung von Wärme verantwortlich ist. Die Einarbeitung der Nanopartikel erfolgt unter Verwendung von Dispergieradditiven, welche bevorzugt aus der Klasse der nichtionischen Tenside stammen.

### Stand der Technik

Es ist bekannt, dass der Wärmehaushalt in Gebäuden über die Integration von Sonnenschutzverglasung entscheidend verbessert werden kann. Verbreitet ist dabei die Verwendung von Glas, welches mit einer die Sonnenstrahlen reflektierenden Metallschicht (Z.B. Ag) beschichtet ist. Alternativ zu beschichtetem Glas kann eine die Sonnenstrahlen absorbierende Folie auf die Glasscheiben aufgeklebt werden. Die Transmission im sichtbaren Bereich wird dabei nur gering beeinträchtigt. Der Nachteil ist allerdings, dass neben den Sonnenstrahlen auch langwellige Strahlung reflektiert wird, insbesondere die von Mobiltelefonen.

Bei Verwendung von Verbundverglasungen können Sonnenstrahlen auch durch entsprechend ausgerüstete Folien absorbiert werden. Dazu verwendet man eine Zwischenschichtfolie z.B. auf Basis von Polyvinylacetal, welche die Sonnentrahlen, vorzugsweise im Wellenlängenbereich oberhalb 800 nm absorbiert, dabei die Transmission im sichtbaren Bereich (380-780 nm) nur geringfügig beeinträchtigt und keine negativen Einflüsse auf die Strahlung von Mobiltelefonen oder Radios besitzt.

In US 5,830,568 ist beispielsweise die Verwendung von IR-Strahlung absorbierenden Partikeln in Folien aus Polyvinylbutyral (PVB) bzw. Ethylenvinylacetat (EVA) dargelegt. Bei den beschriebenen Partikeln handelt es sich um Antimonzinnoxid (ATO) und Indiumzinnoxid (ITO). Über die Verwendung von Dispergieradditiven wird nicht berichtet. Die Verwendung von ATO in Form kleiner Partikelgröße (<200 nm) hat den Nachteil, dass diese Partikel eine deutliche photokatalytische Aktivität zeigen, was in der Folie zu Zersetzungen führen kann. Zudem bewirken diese Partikel eine Verringerung der Lichttransmission im sichtbaren Bereich. Ein Nachteil von ITO für die Verwendung als IR-absorbierende Partikel liegt in deren hohen Preis.

EP 1419999 A1 beschreibt unter anderem den Einsatz von ITO und ATO als IR-absorbierende Partikel in PVB unter Verwendung von Dispergierhilfsmitteln wie Polyphosphat-Salzen und Acetylaceton. Diese werden als Additive dem Weichmacher zugesetzt. Die Einbringung der IR-absorbierenden Partikel erfolgt ausschließlich über den Weichmacher unter Zuhilfenahme einer Perlmühle. EP 1795508 A1 beschreibt unter anderem die Verwendung von IR-absorbierenden Partikeln, die mit Ammonium-Verbindungen beschichtet sind, um die UV-Stabilität zu verbessern. Die Verwendung von mit Zink dotierten Antimonoxiden oder nichtionischen Tensiden wird nicht erwähnt.

In EP 1785404 A1 wird neben IR-Absorbern die Verwendung von Tensiden beschrieben, um eine Zwischenschichtfolie beständiger gegen hohe Feuchtigkeit zu machen. Auch hier erfolgt die Zugabe der Partikel über den Weichmacher. Unter anderem wird die Verwendung von Phosphatestern ethoxylierter Nonylphenole erwähnt, die in geringer Konzentration (bis max. 1 Gew.%) der Weichmacher/IR-Absorber Mischung zugesetzt werden. Neben den Tensiden werden vor allem weitere Verbindungen zugegeben, wie etwa Acetylaceton, um die Dispergierbarkeit der Partikel zu verbessern. Als Partikel werden solche aufgeführt, die in der Lage sind IR-Strahlung zu absorbieren, bsp. Indiumzinnoxid (ITO) oder Antimonzinnoxid.

Die Einarbeitung von Nanopartikeln in Kunststoffe stellt eine Herausforderung für den Verarbeiter dar. Dies ist besonders der Fall bei der Verwendung von transparenten Kunstoffen. Der Grund dafür liegt in der Tendenz der Nanopartikel aufgrund, der großen Oberfläche zu reaggregieren und Teilchenzusammenlagerungen in einer Größenordnung auszubilden, die Auswirkungen auf die Streuung und Absorption von sichtbarem Licht hat. Um die optischen Eigenschaften von transparenten Polymerfolien, insbesondere weichgemachter Polyvinylbutyralfolien, nicht negativ zu beeinflussen, stellt die Verwendung von funktionellen Nanopartikeln im Bereich 10-100 nm, bevorzugt im Bereich von 30-60 nm eine geeignete Methode dar, da die Wellenlängen des sichtbaren Lichts (380-780 nm) aufgrund der geringen Primärteilchengröße nur geringfügig beeinflusst werden. Dabei ist jedoch immer darauf zu achten, dass entsprechende Nanopartikel vor, während und nach der Verarbeitung nicht wieder agglomerieren und damit eine Trübung der Folie verursachen.

Die IR-absorbierenden Partikel müssen daher einerseits zur Vermeidung von Trübungen möglichst kleinteilig sein, so dass sich in optischen Anwendungen Nanopartikel mit dem Durchmesser von weniger als 200 nm etabliert haben. Andererseits neigen Partikel dieser Größe aber sehr stark zur Reagglomerisation, wodurch sich wieder Trübungen in der Folie ergeben. Gemäß dem Stand der Technik werden die Partikel im verwendeten Weichmacher dispergiert. Hierdurch ist die Reagglomerisation umso ausgeprägter, je unterschiedlicher die Polarität zwischen Partikel und Weichmacher ist. Der Einsatz von Dispergierhilfsmitteln in Weichmacher ist aber in Folien für Verbundsicherheitsgläser sehr kritisch, da sich leicht Unverträglichkeiten eines Weichmachergemischs mit der Polymermatrix (PVB) einstellen, die zum Ausschwitzen des Weichmachers oder Trübungen führen. Weiterhin sind die bestehenden Systeme in ihrer IR-Absorptionsfähigkeit verbesserungsfähig.

### Aufgabe der Erfindung

Aufgabe der vorliegenden Erfindung war es daher, ein Verfahren bereit zu stellen, mit dem sehr kleine Partikel von IR-absorbierenden Substanzen in eine weichmacherhaltige Polyvinylacetalmatrix eingebracht werden können, ohne deren Eignung als Zwischenschichtfolie für Verbundverglasungen zu verschlechtern. Insbesondere die Reagglomerisation der Partikel sollte weitgehend unterbunden werden.

Es wurde gefunden, dass sich Nanopartikel, insbesondere wasserfreies Zinkantimonat der Zusammensetzung ZnO/Sb2O5 (molares Verhältnis 0.8-1.2) in Tensiden mit einem HLB-Wert größer 8 sehr gut dispergieren lassen, und direkt mittels Extrusion in weichgemachtes Polyvinylbutyral eingebracht werden können, ohne dass es dabei zu Agglomerationen und somit zu Trübungen in der extrudierten Folie bzw. damit hergestelltem Verbundsicherheitsglas kommt.

### Darstellung der Erfindung

Gegenstand der vorliegenden Erfindung ist daher ein Verfahren zur Herstellung von Folien aus weichmacherhaltigem Polyvinylacetal, enthaltend IR-Strahlung absorbierende anorganische Partikel durch Extrusion einer homogenen Mischung aus mindestens einem Weichmacher, Polyvinylacetal und den anorganischen Partikeln, wobei die anorganischen Partikel in mindestens einem nicht-ionischen Tensid dispergiert und die so erhaltene Dispersion in den Extruder zum weichmacherhaltigen Polyvinylacetal eindosiert wird.

Ein weiterer Gegenstand sind polyvinylacetalhaltige Folien, enthaltend IR-Strahlung absorbierende anorganische Partikel, mindestens einen Weichmacher und ein nicht-ionisches Tensid, wobei als anorganische Partikel Zinkantimonat mit einem molaren Verhältnis von ZnO/Sb₂O₅ von 0,8 bis 1,2 wird.

Erfindungsgemäße Zwischenschichtfolien können z.B. in Windschutzscheiben von Fahrzeugen, als Sonnendachglas in Fahrzeugen oder Gebäuden, aber auch als Wärmeschutzglas in Gebäuden eingesetzt werden.

Erfindungsgemäß werden als IR-Strahlung absorbierende anorganische Partikel Zink-antimonate, Zinn-dotiertes Indiumoxid (ITO), < Antimon-dotiertes Zinnoxid (ATO), Aluminium-dotiertes Zinkoxid (AZO) oder Zinkantimonat mit einem molaren Verhältnis von ZnO/Sb₂O₅ von 0,8 bis 1,2 mit einer Partikelgröße von 10 bis 300 nm eingesetzt.

Im Rahmen dieser Erfindung wird bevorzugt wasserfreies Zinkantimonat, insbesondere auf einer molaren Zusammensetzung von ZnO/Sb₂O₅ 0,8 bis 1,2 (erhältlich von Nissan Chemicals), als 60%iges Methanol-Slurry eingesetzt. Die Partikelgröße liegt dabei im Bereich von 5-500 nm (dynamische Lichtstreuung). Je nach Art der verwendeten Partikel kann eine Vorbehandlung notwendig sein, um z.B. gebildete Aggregate wieder aufzubrechen und die Partikel wieder auf Primärpartikelgröße zu bringen. Um eine weitere Verkleinerung der Partikelgröße und eine engere Partikelgrößenverteilung zu erhalten, kann man das Ausgangsmaterial mittels mechanischer Beanspruchung z.B. durch hohe Scherkräfte, behandeln.

Eine geeignete Methode ist die Verwendung von kleinen, harten Kugeln sog. Perlen, um die Partikelagglomerate zu zerkleinern. Dies geschieht dynamisch in einer Mühle, der sog. Perlmühle, in der starke Scherkräfte eingebracht werden können. Das dafür notwendige Gehäuse besteht zumeist aus Edelstahl oder SiC. Die eingesetzten Perlen müssen eine hohe Härte besitzen, da sie im Prozess kontinuierlich einer großen Beanspruchung ausgesetzt sind und nach dem Prozess wieder zurück gewonnen werden können. Geeignete Perlen bestehen zumeist aus ZrO₂, welches u.a. mit Y dotiert werden kann. Die Perlengrößen richten sich nach dem zu behandelnden Ausgangsmaterial, liegen aber meist im Bereich von 50-200 Mikrometern. Im Rahmen dieser Erfindung wurden die ZnSb₂O₆-Partikel mit einer Perlmühle der Firma Bühler GmbH (Typ MMP1) behandelt. Die Partikelgröße konnte dabei von anfänglich etwa 95 nm auf 39 nm (beides d90) reduziert werden.

Durch Modifizieren der Partikeloberflächen mit geeigneten Additiven lassen sich die Kompatibilitäten von anorganischen Partikeln und Kunststoffen verbessern und die Verteilung dieser Partikel optimieren. Erfindungsgemäß verwendete Partikel können an der Oberfläche mit sog. Kupplungsreagenzien modifiziert sein. Darunter versteht man Verbindungen; die auf die Partikeloberfläche aufgebracht werden und dabei chemisch gebunden sein können. Die Menge der so aufgebrachten Verbindungen bezogen auf die Partikelmasse beträgt in der Regel zwischen 0,01 und 5 Gew. %. Geeignete Modifikatoren oder Kupplungsreagenzien können z.B. Verbindungen aus der Klasse der Siloxane, Phosphatester, Alkylamine, Silane, Silikate oder metallorganischer Verbindungen sein, die jeweils über Alkylreste mit unterschiedlicher Länge und Aufbau verfügen und so an die verschiedenen Harzmatrices angepasst werden können.

Die erfindungsgemäß eingesetzten Nanopartikel lassen sich weiter auch mit Polyvinylacetalen modifizieren. Dies kann z.B. in Form einer methanolischen Lösung auf die IR-absorbierenden Partikeln aufgebracht werden. Das verwendete Polyvinylacetal-Harz kann das gleiche, aber bevorzugt ein niedrigeres Molekulargewicht wie das Polyvinylacetal-Harz der Filmmatrix aufweisen.

Im Rahmen dieser Erfindung wurde gefunden, dass eine besonders geeignete Methode zur Einbringung von IR-Strahlung absorbierenden anorganischen Partikeln, besonders bevorzugt von wasserfreiem ZnSb₂O 6 (ZnO/Sb₂O₅ 0.8/1.2), in weichgemachte Polyvinylacetalfolien die direkte Dosierung einer Dispersion der Partikel in einem nichtionischen Tensid in den Extruder bzw. in das weichgemachte Polyvinylacetal-Harz darstellt.

Es wurde gefunden, dass bei Verwendung geeigneter Dispergiermedien die Einbringung der funktionellen Nanopartikel über eine direkte Dosierung dieser Dispersion in den Extruder möglich ist, ohne dabei wichtige Eigenschaften bei späterer Verwendung z.B. im Verbundsicherheitsglas negativ zu beeinträchtigen.

Alternativ lassen sich die Nanopartikel aus wasserfreiem Zinkantimonat mit einem molaren Verhältnis von ZnO/Sb₂O₅ von 0,8 bis 1,2 auch über den Weichmacher einbringen. Dazu bedarf es jedoch der Zugabe von geeigneten Dispergieradditiven, die eine Verträglichkeit der Partikel mit dem Weichmacher herstellen. Ohne diese Zusätze besteht die Gefahr, dass erfindungsgemäße Nanopartikel reaggregieren würden. Die Einbringung über den Weichmacher führt, insbesondere wenn weitere Additive, wie UV-Absorber aber vor allem Antihaftmittelsalze zugesetzt werden, welches für die spätere Verwendung der Folie in Verbundsicherheitsglas, insbesondere für Windschutzscheiben, unabdingbar ist, nicht zu optimalen Ergebnissen.

Als besonders geeignete Dispergiermedien haben sich Verbindungen aus der Klasse der nichtionischen Tenside mit einem HLB-Wert von mehr als 8 herausgestellt. Diese Tenside besitzen die Fähigkeit, Oberflächen unterschiedlicher Oberflächenspannung zu benetzen und zugleich durch ihre amphiphile Struktur eine Suspension dieser Partikel in einem geeigneten Medium aufrecht zu erhalten. Bei der Einarbeitung in weichgemachte Polyvinylacetalfolie verhindern diese Tenside eine Agglomeration der Nanopartikel, insbesondere von wasserfreiem Zinkantimonat, sodass die herausragenden optischen Eigenschaften der PVB-Folie nicht negativ beeinflusst wird, was für eine spätere Verwendung z.B. in Windschutzscheiben, unabdingbar ist.

Als bevorzugt im Rahmen dieser Erfindung eignen sich nichtionische Tenside aus der Klasse der Alkylphenolpolyglykolether mit einem mittleren bis hohen HLB-Wert (Hydrophile-Lipophile-Balance) von mehr als 8, bevorzugt von 9-16, besonders bevorzugt von 10-14. Der HLB-Wert wurde nach Griffin gemäß Stache, Tensid-Taschenbuch (1979), 70-72 bestimmt und ist eine empirische Größe zur Charakterisierung von Tensiden nach den hydrophoben und hydrophilen Gruppen unter Berücksichtigung ihres Strukturaufbaus.

Der HLB-Wert kann für nichtionische Tenside Werte zwischen 1 und 20 annehmen. Er lässt sich nach folgender Gleichung berechnen:

HLB=20*(1-Mₕₚ/M), wobei Mₕₚ= Molekulargewicht des hydrophoben Anteils im Tensid und M= Molekulargewicht des Tensids. So ist z.B. der HLB-Wert von Marlophen NP12 mit M=748 und Mₕₚ=220 (Isononylphenolgruppe) HLB = 20*(1-220/748)=14,1.

Ein niedriger HLB-Wert steht für sehr hydrophobe Verbindungen mit ausgeprägtem Anteil an Kohlenwasserstofflcetten. Derartige Verbindungen werden auch als W/O-Emulgatoren bezeichnet. Hingegen haben Moleküle mit einem hohen HLB-Wert die Eigenschaft, Öl in Wasser zu dispergieren und werden daher auch als O/W- Emulgatoren bezeichnet. Die Benetzbarkeit anorganischer Nanopartikel hängt u.a. von der Gestalt, der chemischen Zusammensetzung und der Oberflächenladung bzw. Oberflächenspannung ab. Eine stabile Suspension spricht für eine gute Benetzung der Festkörper-Oberfläche und dementsprechend geringerer Tendenz der Partikel zu aggregieren.

Mit steigendem Ethoxylierungsgrad werden die Nonylphenole in zunehmendem Maße wasserlöslich. Dies kann ungünstige Folgen bei dem Extrusionsprozess selbst, aber auch bei der späteren Verwendung in Verbundsicherheitsglas haben. Deshalb ist ein mittlerer Ethoxylierungsgrad von größer n = 12 zu vermeiden.

Erfindungsgemäß eignen sich besonders als Dispergiermittel ethoxylierte Alkylphenole mit einem Ethoxylierungsgrad von 6 bis 12. Besonders bevorzugt werden nichtionische Tenside aus der Klasse der Fettalkoholpolyglykolether der Zusammensetzung R-O(CH2-CH2-O)ₙ-H mit R= geradkettige oder verzweigte Kohlenwasserstoffkette mit C9-C19 Kohlenstoffatomen und n=3-15, Alkylphenolpolyglykolether der Zusammensetzung

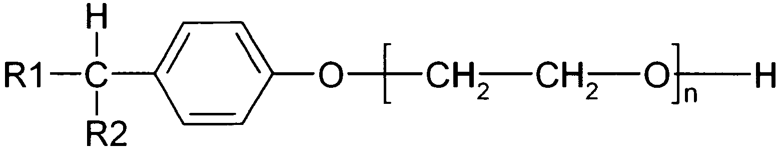

mit R1=H, C1-C12 und R2=C1-C4, und einem Ethoxylierungsgrad n = 4-12, Polypropylenglykolethylglykolether der Zusammensetzung

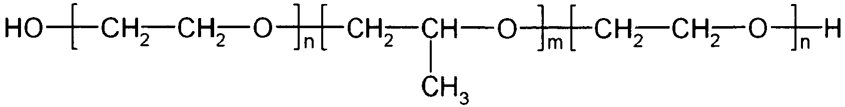

mit n=10-30 und m= 20-50 eingesetzt.

Die folgende Tabelle 1 zeigt erfindungsgemäß einsetzbare nicht-ionische Tenside, deren Dispergiervermögen vom HLB-Wert und ggf. dem Ethoxylierungsgrad abhängt. "Synative ES PTO" ist kein nicht-ionisches Tensid und besitzt im Rahmen dieser Erfindung auch kein ausreichendes Dispergiervermögen.

**Tabelle 1**

| | HLB-Wert | Mittlerer Ethoxylierungsgrad n | Viskosität [mPas]/20°C | Dispergiervermögen |
|---|---|---|---|---|
| Marlophen¹ NP4 | 8,8 | 4 | 350 | mäßig |
| Marlophen¹ NP6 | 10,9 | 6 | 350 | Sehr gut |
| Marlophen¹ NP9 | 12,5 | 9 | 350 | Sehr gut |
| Marlophen¹ NP12 | 14,1 | 12 | 350 | Sehr gut |
| Synative ES PTO | 3,7 | - | 65 | schlecht |
| Isodecylalkohol 5EO | 11,6 | 5 | | mäßig |

"Marlophen" ist ein Handelsname der Fa. Sasol GmbH

Eine eher qualitative Möglichkeit das Dispergiervermögen von sogenannten Dispergiermedien, bsp. Weichmacher oder Tenside, abzuschätzen besteht darin, die im Rahmen dieser Erfindung eingesetzten Partikel mittels eines Rührwerks (z.B. Ultra-Turrax) bei jeweils gleichen Bedingungen (Drehzahl, Zeit, Temperatur) in den Dispergiermedien zu verteilen und danach die Suspension visuell zu beurteilen. Eine gute Dispergierbarkeit im Rahmen dieser Erfindung, liegt vor, wenn auch nach 48h, bevorzugt 72h, am Boden des Gefäßes keine Ablagerungen von Partikeln, bzw. Aggregaten zu erkennen sind.

Dies ist sehr einfach abzuschätzen, da die in dieser Erfindung verwendeten Partikel eine dunkelblau-schwarze Färbung der Dispersion hervorrufen. Eine starke Sedimentation weist häufig auf das Vorhandensein von Aggregaten hin, welche meist nicht mehr mit einfachen Rührwerken aufzubrechen sind somit auch nicht mehr für die spätere Verwendung in der Folie geeignet sind, da solche Aggregate meist in der Größenordnung liegen, wo sie das sichtbare Licht streuen und somit Trübungen verursachen.

Darüber hinaus hängt die Stabilität von Suspensionen auch von der Temperatur und den eingebrachten mechanischen Kräften ab, da diese unmittelbar auf die Oberflächen der dispergierten Nanopartikel Einfluss haben. Generell steigt die Tendenz zur Aggregation der Nanopartikel mit steigender Temperatur und größerer mechanischer Beanspruchung, etwa durch eingebrachte Scherkräfte während der Extrusion. Aber auch durch chemische Einflüsse, etwa Veränderung des pH-Wertes oder anorganische Salze können die Stabilitäten von Suspensionen beeinträchtigt werden. Für die Verwendung von weichgemachten Polyvinylacetalfolien in Verbundverglasungen ist ein Zusatz von anorganischen Salzen als Haftungsregulator notwendig. Daher ist bei der Einarbeitung von Nanopartikeln in weichgemachte Polyvinylacetalfolien die Anwesenheit von anorganischen Salzen zu berücksichtigen. Die Ladung und Konzentration der ionischen Spezies spielt dabei eine entscheidende Rolle, da die dispergierten Nanopartikel selbst eine große Oberfläche mit nach außen definierter Ladung besitzen und somit eine Angriffsfläche für ebenfalls geladene Spezies bilden. Durch ionische Zusätze lässt sich das Zeta-Potential der kolloidal verteilten Nanopartikel beeinflussen, welches nach der DLVO-Theorie (Derjaguin, Landau, V erwey, Overbeek) ein Maß für die Stabilität von Suspensionen darstellt. So spricht ein hohes Zetapotential, welches für die im Rahmen dieser Erfindung eingesetzten ZnSb₂O₆-Partikel negativ ist, allgemein für stark abstoßende Kräfte zwischen den Nanopartikeln. Dies hat zur Folge, dass sich die Partikel gegenseitig abstoßen und nicht so leicht reagglomerisieren können. Schwächt man dass Zetapotential, etwa durch ionische Zusätze, so kommt es aufgrund der anziehend wirkenden van-der-Waals-Kräfte verstärkt zur Bildung von Agglomeraten, die dann im Glasverbund zur Streuung des sichtbaren Lichts führen und somit Trübungen verursachen. Das Auftreten von Aggregaten bzw. Agglomeraten ist dann am größten, wenn die ionischen Spezies, z.B. Antihaftmittelsalze und die dispergierten Nanopartikel in gleicher Suspension vorliegen.

Als die Haftung regulierende Verbindungen werden vor allem Salze von organischen Carbonsäuren mit C=1-8 Kohlenstoffatomen des Kaliums und Magnesiums eingesetzt, bevorzugt Salze wie Kaliumacetat und Magnesiumacetat. Im Rahmen dieser Erfindung wurde gefunden, dass bei gleichzeitigem Einarbeiten dieser als Antihaftmittel bezeichneten Substanzen und den anorganischen Nanopartikeln eine deutliche Zunahme der Trübung der Folie im Verbundsicherheitsglas zu beobachten ist. Untersuchungen mittels TEM deuten auf eine Zunahme an agglomerierten Partikeln, die im VSG zu Trübungen und Verminderung der Lichttransmission führen. Um dies zu vermeiden, werden im Rahmen dieser Erfindung die Antihaftmittel und die anorganischen Partikel zeitversetzt in den Extruder dosiert.

Die zeitversetzte Dosierung kann z.B. in einer Weise erfolgen, dass die Haftungsregulatoren im Weichmacher gelöst oder suspendiert werden und mit dem PVB-Harz in den Extruder dosiert werden. Nach der Homogenisierung der Weichmacher/PVB-Mischung werden dann die dispergierten Nanopartikel in den Aufschmelzbereich des Extruders eindosiert.

Die Dosierung der optional mit einer Perlmühle (Fa. Bühler GmbH) behandelten Partikel erfolgt als Dispersion dieser Partikel in einem der oben aufgeführten Tenside. Das Partikel:Tensid-Verhältnis liegt dabei insbesondere zwischen 1:20 und 1:1, bevorzugt zwischen 1:15 und 1:5 und besonders bevorzugt zwischen 1:12 und 1:6 Gewichtsprozent bezogen auf 100 Teile weichgemachte Polyvinylacetal-Folie (oder PVB+ WM). Damit wird eine optimale Verteilung dieser Partikel gewährleistet und die Gefahr einer Trübungszunahme im VSG gemindert. Bevorzugt werden die oben genannten Tenside in einer Menge von 0,5 bis 8 Gew.%, besonders bevorzugt von 2 bis 6 Gew.%, insbesondere 3 bis 6 Gew.%, bezogen auf die Folienmischung, eingesetzt. Die Einarbeitung der IR-absorbierenden Partikel in die nichtionischen Tenside im Rahmen dieser.Erfindung erfolgt bevorzugt mittels eines mechanischen Rührwerks, insbesondere eines Hochleistungsrührers (Ultra-Turrax). Die zusätzliche Behandlung mit einer Perlmühle ist dann nicht mehr nötig, so dass sich dieser kurze Prozessschritt sehr einfach bei laufender Produktion durchführen lässt.

Die dispergierten Partikel können in einem Tagesbehälter vorgelegt und mittels einer Pumpe, z.B. einer Zahnradpumpe, direkt in den Extruder dosiert werden. Geeignete Extruder stellen Ein- oder Zweischneckenextruder dar, die gleich- oder gegenläufig ausgelegt sein können.

Bevorzugt erfolgt die direkte Dosierung an einer Stelle im Extruder, an der bereits eine erste Durchmischung von Polyvinylacetal, Weichmacher und evtl. weiteren Additiven stattgefunden hat. Diese zeitversetzte Dosierung reduziert in erster Linie den Einfluss geladener Ionen, wie Antihaftmittelsalze, auf die dispergierten Partikel. Eine Dosierung erfolgt deshalb bevorzugt nach der Einzugszone des Extruders, besonders bevorzugt im Aufschmelzbereich des Extruders. Hier liegt bereits eine homogene Mischung von Polyvinylacetal, Weichmacher sowie der zusätzlichen Additive, insbesondere der Antihaftmittelsalze vor. Dadurch wird die Konzentration der Antihaftmittelsalze relativ zu den zudosierten Nanopartikeln, im Vergleich zur gleichzeitigen Einbringung über den Weichmacher, herabgesetzt.

Zur Herstellung von Polyvinylacetal wird Polyvinylalkohol in Wasser gelöst und mit einem Aldehyd wie Butyraldehyd unter Zusatz eines Säurekatalysators acetalisiert. Das ausgefallene Polyvinylacetals wird abgetrennt, neutral gewaschen, ggf. in einem alkalisch eingestellten wässrigen Medium suspendiert, danach erneut neutral gewaschen und getrocknet.

Die zur Acetalisierung eingesetzte Säure muss nach erfolgter Reaktion wieder neutralisiert werden. Wird hier ein Überschuss an Base (z.B. NaOH, KOH oder Mg(OH)₂) eingesetzt, so erhöht sich der Alkalititer und es kann ganz oder teilweise auf die Zugabe der basischen Substanz verzichtet werden.

Der Polyvinylalkoholgehalt des Polyvinylacetals kann durch die Menge des bei der Acetalisierung eingesetzten Aldehyds eingestellt werden.

Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Polyvinylacetale enthalten neben den Acetaleinheiten noch aus Vinylacetat und Vinylalkohol resultierende Einheiten. Die erfindungsgemäß verwendeten Polyvinylacetale weisen bevorzugt einen Polyvinylalkoholanteil von weniger 20-21 Gew.% auf.

Aus dem Polyvinylalkoholanteil und dem Restacetatgehalt kann der Acetalisierungsgrad rechnerisch ermittelt werden.

Bevorzugt weisen die Folien einen Weichmachergehalt von maximal 40 Gew.%, 35 Gew.%, 32 Gew.%, 30 Gew.%, 28 Gew.%, 26 Gew.%, 24 Gew.% oder 22 Gew.% auf, wobei ein Weichmachergehalt von 15 Gew.% aus Gründen der Verarbeitbarkeit der Folie nicht unterschritten werden sollte (jeweils bezogen auf die gesamte Folienformulierung). Erfindungsgemäße Folien können einen oder mehrere Weichmacher enthalten.

Geeignete Weichmacher für die erfindungsgemäß eingesetzten Folien sind eine oder mehrere Verbindungen ausgewählt aus den folgenden Gruppen:
- Ester von mehrwertigen aliphatischen oder aromatischen Säuren, z.B. Dialkyladipate wie Dihexyladipat, Dioctyladipat, Hexylcyclohexyladipat, Mischungen aus Heptyl- und Nonyl-adipaten, Diisononyladipat, Heptylnonyl-adipat sowie Ester der Adipinsäure mit cycloaliphatischen oder Etherbindungen enthaltenden Esteralkoholen, Dialkylsebazate wie Dibutylsebazat sowie Ester der Sebazinsäure mit cycloaliphatischen oder Etherbindungen enthaltenden Esteralkoholen, Estern der Phthalsäure wie Butylbenzylphthalat oder Bis-2-butoxyethylphthalat

- Ester oder Ether von mehrwertigen aliphatischen oder aromatischen Alkoholen oder Oligoetherglykolen mit einem oder mehreren unverzweigten oder verzweigten aliphatischen oder aromatischen Substituenten, wie z.B. Estern von Di-, Tri- oder Tetraglykolen mit linearen oder verzweigten ali-phatischen oder cycloaliphatischen Carbonsäuren; Als Beispiele für letztere Gruppe können dienen Diethylenglykol-bis-(2-ethyl-hexanoat), Triethylenglykol-bis-(2-ethyl-hexanoat), Tri-ethylen-glykol-bis-(2-ethylbu-ta-no-at), Tetra-ethylen-glykol-bis-n-heptanoat, Triethylengly-kol-bis-n-heptanoat, Triethylenglykol-bis-n-hexanoat, Tetraethylen-glykol-dimethyl-ether und/oder Dipropylenglykolbenzoat
- Phosphate mit aliphatischen oder aromatischen Esteralkoholen wie z.B. Tris(2-ethylhexyl)phosphat (TOF), Triethylphosphat, Diphenyl-2-ethylhexylphosphat, und/oder Trikresylphosphat
- Ester der Zitronensäure, Bernsteinsäure und/oder Fumarsäure.

Besonders geeignet als Weichmacher für die erfindungsgemäß eingesetzten Folien sind eine oder mehrere Verbindungen ausgewählt aus der folgende Gruppe Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8) Di-2-butoxy-ethyl-adipat (DBEA),

Di-2-butoxyethoxyethyladipat (DBEEA) Di-2-butoxyethylsebacat (DBES), Di-2-ethylhexylphthalat (DOP), Di-isononylphthalat (DINP) Triethylenglykol-bis-isononanoat, Triethylenglykol-bis-2-propylhexanoat, Tris(2-ethylhexyl)phosphat (TOF) und Dipropylenglykolbenzoat.

Weiterhin können die erfindungsgemäßen Folien zusätzlich auch übliche Additive, wie zum Beispiel Oxidationsstabilisatoren, UV-Stabilisatoren, Farbstoffe, Pigmente sowie Antihaftmittel enthalten.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

Die im Rahmen dieser Erfindung verwendeten ZnSb₂O₆-Partikel lassen sich auch in Kombination mit anderen den PVB-Folien eigenen funktionellen Eigenschaften, bsp. Schalldämpfung, kombinieren.

Bevorzugt erfolgt dies, indem Teilfolien mit unterschiedlichen Funktionalitäten kombiniert werden. So sind z.B. dreilagige Folien bekannt, bei denen die äußeren Schichten die Anbindung an Glas und eine gute mechanische Stabilität und die innere, weiche Schicht für eine Schalldämmung sorgen. Die unterschiedlichen Teilfolien können z.B. aus Polyvinylacetalen mit unterschiedlichem Molgewicht, Acetalisierungsgrad, Restvinylalkohol- oder acetatgehalt bestehen.

In einer besonderen Variante der vorliegenden Erfindung kann die Polyvinylacetalhaltige Mehrschichtfolie aus mehreren Teilfolien bestehen, von denen mindestens eine die IR-absorbierenden Partikel enthält.

So kann die erfindungsgemäße Mehrschichtfolie aus mindestens einer Teilfolie, enthaltend IR-Strahlung absorbierende anorganische Partikel, mindestens einen Weichmacher und ein nicht-ionisches Tensid, wobei als anorganische Partikel Zinkantimonat mit einem molaren Verhältnis von ZnO/Sb₂O₅ von 0,8 bis 1,2 und mindestens einer weiteren Teilfolie auf Basis von weichmacherhaltigen Polyvinylacetal aufgebaut sein.

Hierbei kann eine Teilfolie enthaltend IR-Strahlung absorbierende Partikel zwischen zwei weichmacherhaltigen Teilfolien auf Basis von Polyvinylacetal angeordnet sein.

Alternativ kann eine weichmacherhaltige Teilfolie auf Basis von Polyvinylacetal zwischen zwei Teilfolien enthaltend IR-Strahlung absorbierende anorganische Partikel, mindestens einen Weichmacher und ein nicht-ionisches Tensid angeordnet sein, wobei als anorganische Partikel Zinkantimonat mit einem molaren Verhältnis von ZnO/Sb₂O₅ von 0,8 bis 1,2 eingesetzt wird.

Für die Teilfolie, welche die IR-absorbierenden Partikel enthält, können alle beschriebenen Ausführungsformen und Varianten der mit dem erfindungsgemäßen Verfahren hergestellten Folien mit IR-absorbierenden Partikel eingesetzt werden.

Erfindungsgemäße Mehrschichtfolien können durch Coextrusion der Teilschichten oder durch Zusammenlegung von separat extrudierten Teilfolien hergestellt werden. Bevorzugt besitzen die Teilfolien bis auf die Partikel die gleiche Zusammensetzung, es ist aber auch möglich, die innere Folie zusätzlich schalldämmend auszuführen. Die kann z.B. gemäß EP 08104948 durch Verwendung eines Polyvinylacetals mit einem Restacetatgehalt von 5 - 8 Mol% für die innere Folie und einem Restacetatgehalt von ca 1 Mol% für die äußere Folie erfolgen.

### Messmethoden:

Der Polyvinylalkohol- und Polyvinylalkoholacetatgehalt der Polyvinylacetale wurde gemäß ASTM D 1396-92 bestimmt.

Der Wasser- bzw. Feuchtegehalt der Folien wird mit der Karl-Fischer-Methode bestimmt. Diese Methode kann sowohl an der unlaminierten Folie als auch an einem laminierten Verbundglas in Abhängigkeit vom Abstand zum Rand der Folie durchgeführt werden.

### Optische Messungen

Alle Messungen erfolgten an Verbundglasscheiben aus Klarglas (Planilux) im Aufbau 2 mm Glas/0,76 mm PVB-Folie/2 mm Glas. Die Messungen der Lichtdurchlässigkeit TL und des direkten Strahlungstransmissionsgrades TE wurden mit einem Spektrophotometer (Fa. Perkin-Elmer)gemäß DIN 410 bestimmt. Die Werte für die Trübung dL und Haze wurden auf einem Farbmessgerät (Fa. Hunterlab) gemäß ECE R-43 bestimmt.

Um die IR-absorbierenden Eigenschaften erfindungsgemäßer Folien im Verbundsicherheitsglas zu bestimmen, wurden Messungen des direkten Strahlungstransmissionsgrades TE im Wellenlängenbereich von 300-2500 nm durchgeführt. Dabei hängt der Strahlungstransmissionsgrad zu gewissen Teilen vom verwendeten Glas ab. Alle Messungen wurden mit Klarglas (Planilux) durchgeführt. Der Strahlungstransmissionsgrad von Verbundsicherheitsglas (VSG), im Aufbau 2 mm Glas/0,76 mm Folie/2 mm Glas beträgt bei Verwendung von weichgemachten Polyvinylacetalfolien ohne IR-absorbierende Partikel gewöhnlich mehr als 76%. Bei der Verwendung erfindungsgemäß hergestellter Folien in gleichem VSG-Aufbau lassen sich TE-Werte kleiner 70%, bevorzugt kleiner 67% erhalten. Für bestimmte Anwendungen, beispielsweise in Windschutzscheiben, ist eine Lichttransmission TL (380-780nm), gemessen nach DIN410, von mindestens 75% notwendig. In einer besonderen Ausführung lassen sich durch Kombination mit Grünglas und erfindungsgemäß hergestellten Folien TE-Werte von unter 45% und gleichzeitig TL-Werte von über 75% erreichen.

### Beispiele:

Die nachfolgenden Mischungen wurden mit einem Zweischneckenextruder hergestellt. Das eingesetzte Polyvinylbutyral (Mowital/Kuraray Europe GmbH) wurde nach bekannten Methoden hergestellt und besitzt einen Anteil an Polyvinylalkoholgruppen von etwa 20.2 Gew.% sowie einen Anteil an Polyvinylacetatgruppen von etwa 1 Gew.%. Der eingesetzte Weichmacher 3G8 (Triethylenglycol-ethylhexanoat) ist kommerziell erhältlich.

### Herstellung der Partikeldispersion:

Zur Herstellung der Nanopartikel-Dispersion im Rahmen dieser Erfindung werden die nichtionischen Tenside in einem geeigneten Behälter vorgelegt und mit einem Ultraturrax-Rührwerk bei mittlerer Drehzahl gerührt. Nun wird langsam die eingesetzte Menge an Celnax CXZ693 M-F mit einem ZnO:Sb₂O₅-Verhältnis von 0,8 bis 1,2 von Nissan Chemical (ZnSb₂O₆ -Slurry; 60%ig in Methanol) zugegeben bei gleichzeitigem Rühren. Es ist darauf zu achten, dass keine zu starke Schaumbildung auftritt. Anschließend wird für etwa 2-3 min. bei mittlerer Drehzahl nachgerührt, sodass eine homogene Dispersion vorliegt.

Tabelle 2 zeigt mit V1-V2 Vergleichsmischungen ohne Nanopartikel oder Dispergiermittel. B1-B3 stellen erfindungsgemäße Beispiele dar.

**Tabelle 2**

| **Beispiel [Gew.%]** | **V1** | **V2** | **B1** | **B2** | **B3** |
|---|---|---|---|---|---|
| PVB | 72 | 72 | 72 | 72 | 72 |
| 3G8 | 28 | 28 | 24 | 24 | 22 |
| CX Z693M-F | - | 0,5 | 0,5 | 0,5 | 0,6 |
| Marlophen NP6 | - | - | 4 | 4 | - |
| Marlophen NP12 | - | - | - | - | 4 |
| Mg-Acetat | 0,02 | 0,02 | 0,02 | - | 0,02 |
| K-Acetat | 0,01 | 0,01 | 0,01 | - | 0,01 |
| H₂O | 0,45 | 0,45 | 0,45 | - | 0,45 |

Mischungen mit der Zusammensetzung B1-B4 gemäß Tabelle 1 wurden auf einem Extruder zu Folien mit einer Dicke von 0,76 mm extrudiert. Hierbei wurden das PVB mit dem Weichmacher in dem Feeder-Bereich und die Partikeldispersion in den Aufschmelzbereich des Extruders eindosiert. Die Mischung im Vergleichsbeispiel V1 wurde ebenfalls auf einem Extruder zu einer 0,76 mm Dicken Folie verarbeitet jedoch ohne die Zudosierung von Dispergiermitteln oder Nanopartikeln. Im Vergleichsbeispiel V2 wurden die Nanopartikel zusammen mit den Antihaftmittelsalzen im Weichmacher dispergiert und in den Feeder-Bereich des Extruders eingebracht.

Aus den so erhaltenen Folien wurden mit je zwei 2,0 mm Planilux-Scheiben Verbundgläser hergestellt. Tabelle 3 zeigt die optischen Eigenschaften dieser Verbundverglasungen. Die K/Mg-Acetate waren zuvor im Weichmacher dispergiert worden.

**Tabelle 3**

| **Beispiel [Gew.%]** | **V1** | **V2** | **B1** | **B2** | **B3** |
|---|---|---|---|---|---|
| Trübung dL | 0,2 | 5,1 | 1,8 | 2 | 2 |
| Haze | 0,1 | 5 | 0,3 | 0,3 | 0,4 |
| Lichtdurch-läs sigkeit TL | 88 | 81 | 85 | 85 | 84 |
| Energiedurchlässigkeit TE (300-2500nm) | 77 | 70 | 66 | 66 | 66 |

Es zeigt sich, dass erfindungsgemäß hergestellte Folien eine hohe Lichttransmission TL bei geringer Energiedurchlässigkeit TE und niedriger Trübung aufweisen.

## Patentansprüche

1. Verfahren zur Herstellung von Folien aus weichmacherhaltigem Polyvinylacetal enthaltend IR-Strahlung absorbierende anorganische Partikel durch Extrusion einer homogenen Mischung aus mindestens einem Weichmacher, Polyvinylacetal und den anorganischen Partikeln, **dadurch gekennzeichnet, dass** die anorganischen Partikel in mindestens einem nicht-ionischen Tensid dispergiert und die so erhaltene Dispersion in den Extruder zum weichmacherhaltigen Polyvinylacetal eindosiert wird.

2. Verfahren nach Anspruch 1, **dadurch gekennzeichnet, dass** als IR-Strahlung absorbierende anorganische Partikel Zink-antimonate, Zinn-dotiertes Indium oxid (ITO), Antimon-dotiertes Zinnoxid (ATO), Aluminium-dotiertes Zinkoxid (AZO) mit einer Partikelgröße von 10 bis 300 nm eingesetzt werden.

3. Verfahren nach Anspruch 1 oder 2, **dadurch gekennzeichnet, dass** als nicht-ionisches Tensid solche mit einem HLB-Wert von mehr als 8 eingesetzt werden.

4. Verfahren nach einem der Ansprüche 1 bis 3, **dadurch gekennzeichnet, dass** als nicht-ionisches Tensid ethoxylierte Alkylphenole mit einem Ethoxylierungsgrad von 6 bis 12 eingesetzt werden.

5. Verfahren nach einem der Ansprüche 1 bis 4, **dadurch gekennzeichnet, dass** die Folie einen Anteil an nicht-ionischem Tensid von 0,1 bis 8 Gew.% bezogen auf die Folienmischung aufweist.

6. Verfahren nach einem der Ansprüche 1 bis 5, **dadurch gekennzeichnet, dass** die Eindosierung der Dispersion der anorganischen Partikel in den Aufschmelzbereich des Extruders erfolgt.

7. Polyvinylacetalhaltige Folie, enthaltend IR-Strahlung absorbierende anorganische Partikel, und mindestens einen Weichmacher, **dadurch gekennzeichnet, dass** als anorganische Partikel Zinkantimonat mit einem molaren Verhältnis von ZnOiSb₂O₅ von 0,8 bis 1,2 und ein nichtionisches Tensid eingesetzt werden.

8. Folie nach Anspruch 7, **dadurch gekennzeichnet, dass** als nicht-ionisches Tensid ethoxylierte Alkylphenole mit einem Ethoxylierungsgrad von 6 bis 12 eingesetzt werden.

9. Polyvinylacetalhaltige Mehrschichtfolie, aufgebaut aus mindestens einer Teilfolie, enthaltend IR-Strahlung absorbierende anorganische Partikel, und mindestens einen Weichmacher, wobei als anorganische Partikel Zinkantimonat mit einem molaren Verhältnis von ZnO/Sb₂O₅ von 0,8 bis 1,2 und ein nichtionisches Tensid eingesetzt werden und mindestens einer weiteren Teilfolie auf Basis von weichmacherhaltigen Polyvinylacetal.

10. Polyvinylacetalhaltige Mehrschichtfolie nach Anspruch 9, **dadurch gekennzeichnet, dass** die Teilfolie enthaltend IR-Strahlung absorbierende Partikel zwischen zwei Teilfolien auf Basis von weichmacherhaltigen Polyvinylacetal angeordnet ist.

11. Polyvinylacetalhaltige Mehrschichtfolie nach Anspruch 9, **dadurch gekennzeichnet, dass** eine Teilfolie auf Basis von weichmacherhaltige Polyvinylacetal zwischen zwei Teilfolien enthaltend IR-Strahlung absorbierende anorganische Partikel, mindestens einen Weichmacher und ein nicht-ionisches Tensid angeordnet ist, wobei als anorganische Partikel Zinkantimonat mit einem molaren Verhältnis von ZnO/Sb₂O₅ von 0,8 bis 1,2 und ein nichtionisches Tensid eingesetzt werden.

## Claims

1. A method for producing films from plasticiser-containing polyvinyl acetal containing IR-radiation-absorbing inorganic particles by extrusion of a homogeneous mixture formed from at least one plasticiser, polyvinyl acetal and the inorganic particles, **characterised in that** the inorganic particles are dispersed in at least one non-ionic surfactant and the dispersion thus obtained is fed into the extruder in a metered manner to form plasticiser-containing polyvinyl acetal.

2. The method according to Claim 1, **characterised in that** zinc antimonates, tin-doped indium oxide (ITO), antimony-doped tin oxide (ATO) and aluminium-doped tin oxide (AZO) having a particle size from 10 to 300 nm are used as IR-radiation-absorbing inorganic particles.

3. The method according to Claim 1 or 2, **characterised in that** surfactants having an HLB value of greater than 8 are used as non-ionic surfactant.

4. The method according to one of Claims 1 to 3, **characterised in that** ethoxylated alkylphenols having a degree of ethoxylation of 6 to 12 are used as non-ionic surfactant.

5. The method according to one of Claims 1 to 4, **characterised in that** the film has a proportion of non-ionic surfactant from 0.1 to 8 % by weight, based on the film mixture.

6. The method according to one of Claims 1 to 5, **characterised in that** the dispersion of the inorganic particles is fed in a metered manner in the melting range of the extruder.

7. A film containing polyvinyl acetal and IR-radiation-absorbing inorganic particles and at least one plasticiser, **characterised in that** zinc antimonite having a molar ratio of ZnO:Sb₂O₅ from 0.8 to 1.2 and a non-ionic surfactant are used as inorganic particles.

8. The film according to Claim 7, **characterised in that** ethoxylated alkylphenols having a degree of ethoxylation from 6 to 12 are used as non-ionic surfactant.

9. A multi-layer film containing polyvinyl-acetal and formed from at least one sub-film containing IR-radiation-absorbing inorganic particles and at least one plasticiser, wherein zinc antimonite having a molar ratio of ZnO:Sb₂O₅ from 0.8 to 1.2 and a non-ionic surfactant are used as inorganic particles, and from at least one further sub-film based on plasticiser-containing polyvinyl acetal.

10. The multi-layer film containing polyvinyl acetal according to Claim 9, **characterised in that** the sub-film containing IR-radiation-absorbing particles is arranged between two sub-films based on plasticiser-containing polyvinyl acetal.

11. The multi-layer film containing polyvinyl acetal according to Claim 9, **characterised in that** a sub-film based on plasticiser-containing polyvinyl acetal is arranged between two sub-films containing IR-radiation-absorbing inorganic particles, at least one plasticiser and a non-ionic surfactant, zinc antimonite having a molar ratio of ZnO:Sb₂O₅ from 0.8 to 1.2 and a non-ionic surfactant being used as inorganic particles.

## Revendications

1. Procédé de fabrication de feuilles en acétal de polyvinyle contenant des plastifiants lesquelles contiennent des particules inorganiques absorbant le rayonnement IR, en extrudant un mélange homogène d'au moins un plastifiant, d'acétal de polyvinyle et desdites particules inorganiques, **caractérisé en ce que** les particules inorganiques sont dispersées dans au moins un agent tensioactif non-ionique et la dispersion ainsi obtenue est ajoutée à l'acétal de polyvinyle contenant des plastifiants lequel est déjà présent dans l'extrudeuse.

2. Procédé selon la revendication 1, **caractérisé en ce qu'**en tant que particules inorganiques absorbant le rayonnement IR, on met en oeuvre des antimoniates de zinc, l'oxyde d'étain/indium dopé (ITO), l'oxyde d'étain dopé à l'antimoine (ATO), l'oxyde de zinc dopé à l'aluminium (ATO), avec une taille de particules comprise entre 10 et 300 nm.

3. Procédé selon la revendication 1 ou 2, **caractérisé en ce que** l'on utilise en tant qu'agent tensioactif non-ionique ceux ayant un indice HLB supérieur à 8.

4. Procédé selon l'une des revendications 1 à 3, **caractérisé en ce que** l'on utilise en tant qu'agent tensioactif non-ionique des alkylphénols éthoxylés ayant un degré d'éthoxylation compris entre 6 et 12.

5. Procédé selon l'une des revendications 1 à 4, **caractérisé en ce que** ladite feuille présente une proportion d'agent tensioactif non-ionique comprise entre 0,1 et 8 % en poids, par rapport audit mélange pour feuilles.

6. Procédé selon l'une des revendications 1 à 5, **caractérisé en ce que** l'ajout de ladite dispersion de particules inorganiques est réalisé dans la zone de fusion de l'extrudeuse.

7. Feuille contenant de l'acétal de polyvinyle laquelle contient des particules inorganiques absorbant le rayonnement IR ainsi qu'au moins un plastifiant, **caractérisée en ce que** l'on met en oeuvre, en tant que particules inorganiques, de l'antimoniate de zinc avec un rapport molaire de ZnO/Sb₂O₅ compris entre 0,8 et 1,2 ainsi qu'un agent tensioactif non ionique.

8. Feuille selon la revendication 7, **caractérisée en ce que** l'on utilise en tant qu'agent tensioactif non-ionique des alkylphénols éthoxylés ayant un degré d'éthoxylation compris entre 6 et 12.

9. Feuille multicouche contenant de l'acétal de polyvinyle, constituée d'au moins une feuille partielle contenant des particules inorganiques absorbant le rayonnement et au moins un plastifiant, les particules inorganiques mises en oeuvre étant constituées d'antimoniate de zinc avec un rapport molaire de ZnO/Sb₂O₅ compris entre 0,8 et 1,2 et d'un agent tensioactif non-ionique, et d'au moins une autre feuille partielle à base d'acétal de polyvinyle contenant des plastifiants.

10. Feuille multicouche contenant de l'acétal de polyvinyle selon la revendication 9, **caractérisée en ce que** la feuille partielle contenant des particules absorbant le rayonnement IR est disposée entre deux feuilles partielles à base d'acétal de polyvinyle contenant des plastifiants.

11. Feuille multicouche contenant de l'acétal de polyvinyle selon la revendication 9, **caractérisée en ce qu'**une feuille partielle à base d'acétal de polyvinyle contenant des plastifiants est disposée entre deux feuilles partielles contenant des particules inorganiques absorbant le rayonnement IR, au moins un plastifiant et un agent tensioactif non-ionique, les particules inorganiques mises en oeuvre étant constituées d'antimoniate de zinc avec un rapport molaire de ZnO/Sb₂O₅ compris entre 0,8 et 1,2 et d'un agent tensioactif non-ionique.
